# EUROPEAN PATENT SPECIFICATION

(11) **EP 0 551 571 B1**
(45) Date of publication and mention of the grant of the patent: **29.05.1996**
(21) Application number: 92117385.2
(22) Date of filing: 12.10.1992
(51) Int. Cl.: A21C 1/02

(54) **A kneading machine for food products**
Knetmaschine für Nahrungsprodukte
Machine à pétrir pour produits alimentaires

(30) Priority: 13.01.1992 IT TO920016
(43) Date of publication of application: 21.07.1993
(73) Proprietor: SANCASSIANO S.p.A., I-12060 Roddi d'Alba (Cuneo) (IT)
(72) Inventor: Drocco, Amabile, I-12051 Alba (Cuneo) (IT)
(74) Representative: Notaro, Giancarlo

(56) References cited:
- DE-B- 1 298 466
- FR-A- 396 464
- FR-A- 418 780
- FR-A- 425 071

## Description

The present invention relates to a kneading machine for foodstuffs, in particular flour-based products, comprising:
- a kneading tank which is rotatable about a first substantially vertical axis, said tank being provided with an upwardly projecting coaxial column movable with the tank;
- a fixed support structure adjacent the rotary tank;
- a spiral-type kneading tool which is supported by the support structure, so as to rotate inside the tank about a second substantially vertical axis at a distance from the first axis.

Kneading machines of the above-described type, commonly known as spiral kneading machines, are already known.

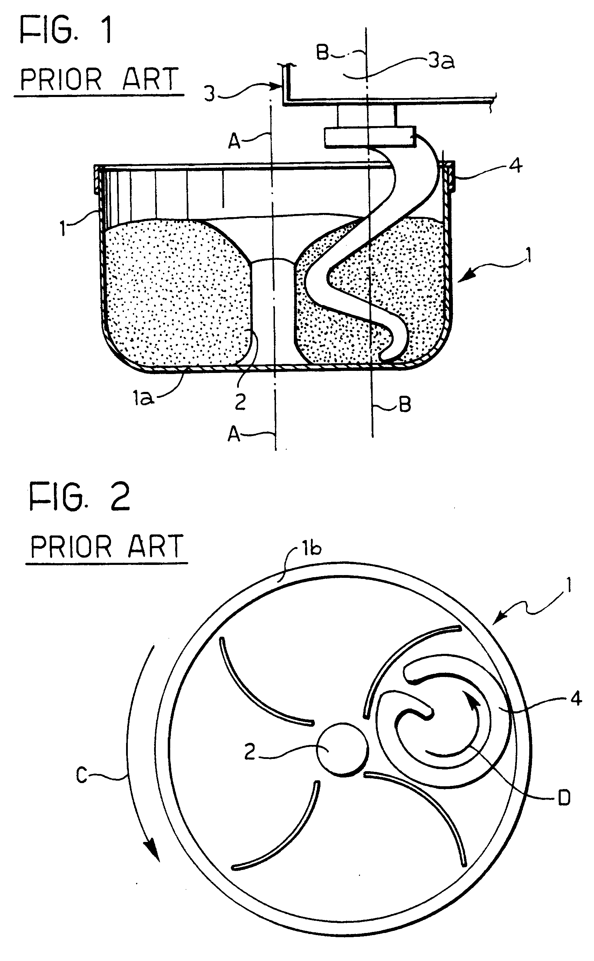

Figures 1 and 2 show schematically a lateral partial cross-section elevation and a plan view of a conventional spiral kneading machine. In these Figures, 1 designates the kneading tank which is rotatable about a vertical axis A, and is provided with a central column 2 coaxial with the tank 1 and projecting towards the top of the tank 1. A fixed support structure 3 is disposed adjacent the tank 1 and comprises a head 3a which projects in cantilever form above the tank 1, and supports a spiral-type kneading tool 4 which is rotatable inside the tank 1 about a second substantially vertical axis B at a distance from the first axis A.

These known spiral-type kneading machines process one batch of product to be kneaded at a time, and during this processing the rotation of the tank gradually brings the various portions of product into contact with the tool, until the required features of the mixture are obtained. However these known machines require a kneading time which for some preparations may be excessively long and may give rise to undesirable heating of the product.

A kneading machine is also known from FR-396464, of the type comprising a rotary tank provided with a central column coaxial with the tank, and a kneading tool which is rotatable inside the tank, and which has a central cylindrical body from which two blades project, each of which comprises a substantially flat and radial plate. A wall having an arcuate form is disposed in such a manner that it partially surrounds the kneading tool, such that each time the outer ends of the blades pass close to the vertical wall, they displace and divide between them portions of dough. The vertical wall thus serves the purpose of compressing and breaking up any lumps present in the mixture and of cutting the dough into pieces by subjecting it to compression against this vertical wall. FR-A-418 780 disclosed the possibility of using helical kneading tools in place of bladed kneading tools

The object of the present invention is to provide a kneading machine of the type indicated initially in the present description, the kneading time of which is substantially shorter than that required for kneading machines of the known type, without however further complicating the design and / or increasing the cost substantially.

This object is achieved in that the machine also comprises a fixed counter member rigidly connected to the support structure, consisting of an arcuate wall disposed coaxially to the envelope of the spiral tool, on the downstream side thereof with respect to the direction of rotation of the kneading tank, said counter member being intended to form a narrow passage between said wall and the spiral tool which projects along an arcuate section substantially coaxially to the envelope of the spiral tool, such that the amount of time the mixture remains in contact with the spiral tool is increased, and the mixture is also subjected to a force of compression towards the bottom of the tank.

By means of this feature, the kneading machine according to the present invention increases the time for which the mixture is retained in contact with the kneading tool, and is subjected by the latter to a force of compression against the bottom of the tank, thus reducing drastically the kneading time such that it is only approximately a third of the time required for conventional spiral machines, and consequently also reducing the heating of the mixture, all of which involves a very simple structural alteration compared with conventional machines, at an almost negligible cost.

Further features and advantages of the present invention will become apparent from the following description with reference to the appended drawings provided purely by way of non-limiting example, in which:
- Figures 1 and 2 are respectively a lateral partial cross-section elevation and a plan view of a kneading machine according to the prior art;
- Figures 3 and 4 are views similar to Figures 1 and 2 of a machine according to the present invention;
- Figures 5 and 6 are enlarged plan views of a first embodiment of the invention;
- Figures 7 and 8 are views similar to Figures 5 and 6, showing a variant embodiment of the kneading machine according to the present invention.

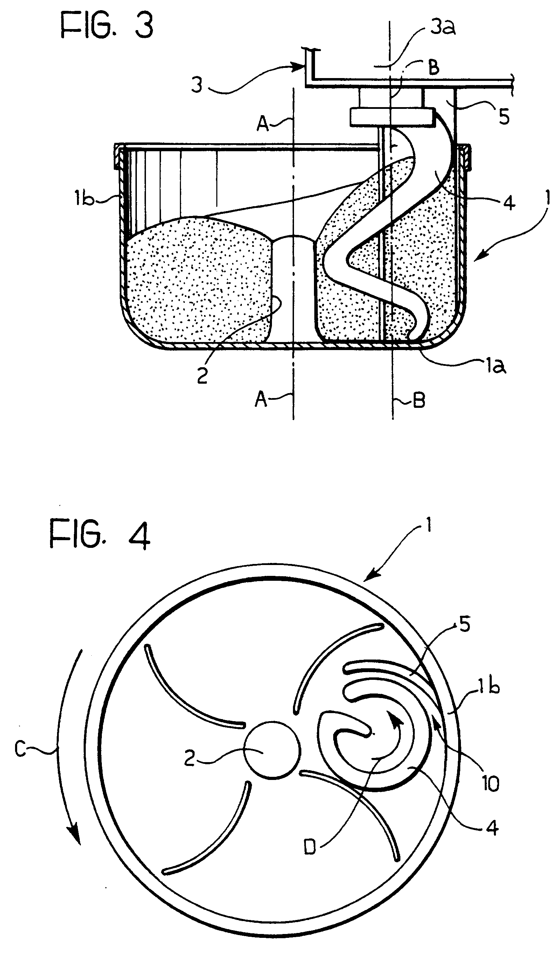

With reference to Figures 3 and 4, a kneading machine for foodstuffs, in particular flour-based mixtures, comprises a tank 1, which in the non-limiting example illustrated comprises an upwardly projecting central column 2 rotatable about a substantially vertical axis A. A support structure 3, which is fixed relative to the rotary tank 1, comprises a head 3a which projects in cantilever form above the tank 1 such as to support rotatably a rotary spiral-type kneading tool 4, driven by a motor unit of a known type and not illustrated in the Figures.

The head 3a also supports an arcuate wall 5 which projects vertically as far as the vicinity of the bottom of the tank 1, and surrounds part of the envelope of the spiral tool 4, such that a narrow passage 10 is defined between the wall and the envelope of the spiral tool. This narrow passage 10 extends along an arcuate section adjacent the envelope of the spiral tool 4, which is preferably, but not necessarily at least 45°.

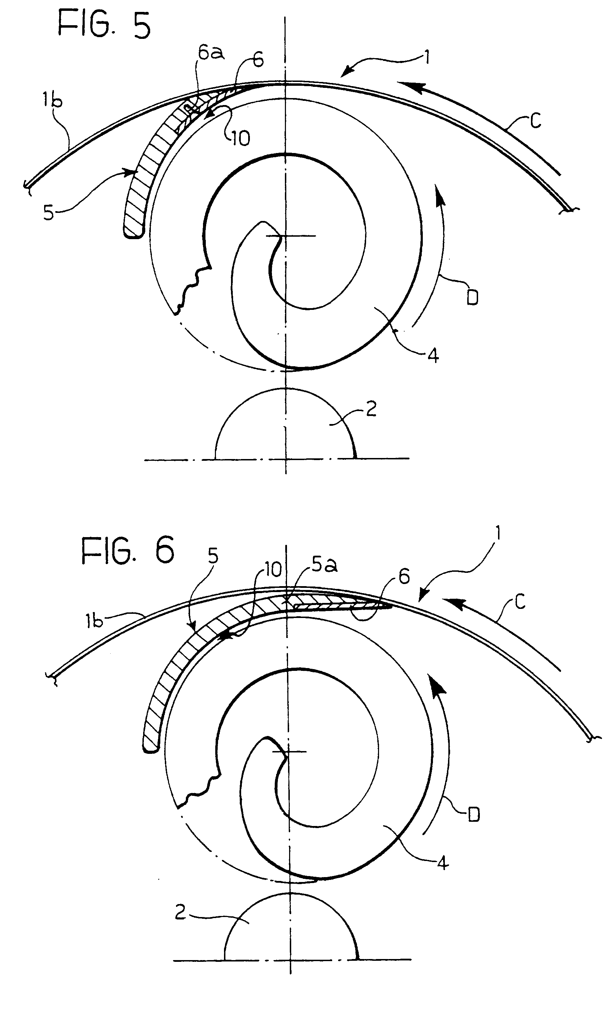

With reference to Figures 5 and 6, the wall 5 is provided on its side opposite the kneading tool 4 with a blade 6 attached rigidly to the wall 5, for example by means of screws 6a consisting of synthetic material, the purpose of which is to scrape the mixture away from the lateral wall of the tank 1.

In the embodiment illustrated in Figure 6, the wall 5 comprises a section 5a interposed between the spiral 4 and the lateral wall of the tank 1, corresponding to the plane on which the rotational axis of the tank A and the rotational axis of the kneading tool B are disposed. In this case the compression force exerted by the dough, which is entrained by the tool 4 and by the tank 1 as they rotate, is exerted entirely on the section 5a of the wall 5, thus eliminating stress on the lateral wall of the tank 1, and consequently irritating vibrations of the tank 1 as it rotates.

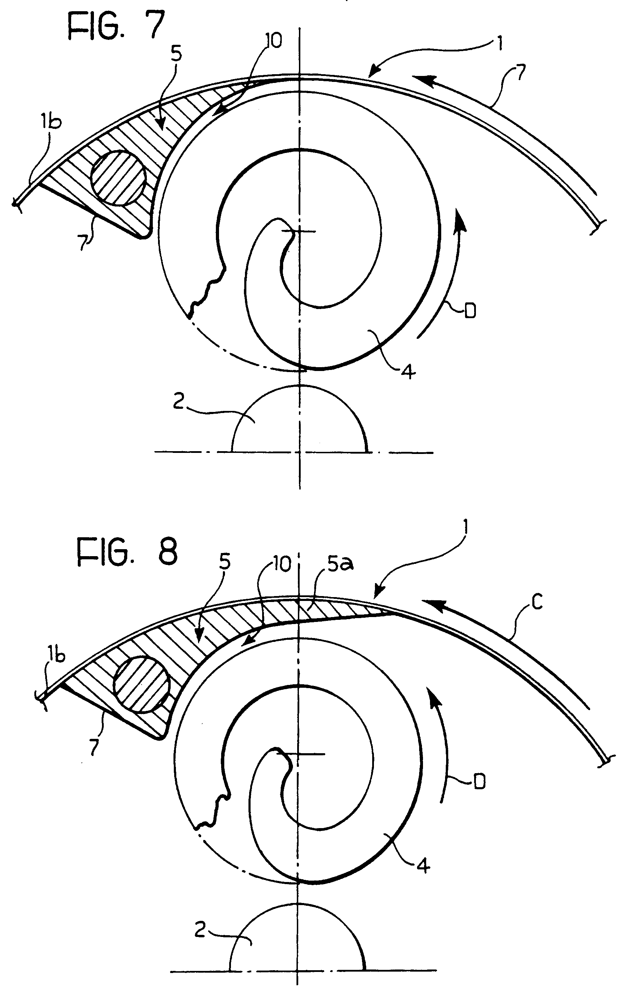

Figures 7 and 8 are a variant embodiment respectively of Figures 5 and 6, in which the wall 5 comprises a component which has a substantially triangular plan form and includes a connection section 7 extending radially towards the lateral wall of the tank 1 such that the mixture which emerges from the narrow passage 10 cannot come to a standstill between the wall 5 and the lateral wall of the tank 1. In use the tank 1 rotates for example according to the arrow C in an anti-clockwise direction in the Figures. The spiral tool 4 also rotates anti-clockwise, as indicated by the arrow D, about the substantially vertical axis B. The mixture in the tank comes into contact with the tool 4, and owing to the centrifugal force tends to escape from the tool, however the wall 5 opposes this escape and forces the mixture to remain longer in contact with the tool 4. The mixture thus fills the central aperture of the spiral tool 4 which, owing to its helical form and its rotation, forces the mixture towards the base 1a of the tank 1, such that the product to be kneaded accumulates (as shown in Figure 3) in the vicinity of the tool 4, showing that the mixture is maintained longer in contact with the tool 4 owing to the presence of the wall 5, thus permitting very efficient kneading and a drastic reduction of the kneading time (by approximately 60%).

## Claims

1. A kneading machine for foodstuffs, in particular flour-based mixtures, comprising:
- a kneading tank (1) which is rotatable about a first substantially vertical axes (A), said tank (1) being provided with an upwardly projecting coaxial column (2) movable with the tank (1);
- a fixed support structure (3, 3a) adjacent the rotary tank (1);
- a spiral-type kneading tool (4) which is supported by the support structure (3, 3a) so as to rotate inside the tank (1) about a second substantially vertical axis (B) at a distance from the first axis (A), characterised in that the machine also comprises a fixed counter member (5) rigidly connected to the support structure (3, 3a), consisting of an arcuate wall disposed coaxially to the envelope of the spiral tool (4), on the downstream side thereof with respect to the direction of rotation of the kneading tank (1), said counter member (5) being intended to form a narrow passage between said wall and the spiral tool (4) which extends along an arcuate section substantially coaxially to the envelope of the spiral tool (4) such that the amount of time the mixture remains in contact with the spiral tool (4) is increased and the mixture is also subjected to a force of compression towards the bottom (1b) of the tank (1b).

2. A machine according to Claim 1, characterised in that the narrow passage (10) surrounds the envelope of the spiral tool (4) for an arc of at least 45°.

3. A machine according Claim 2, characterised in that part (5a) of said fixed counter member (5) intersects the plane defined by the rotational axis (A) of the tank (1) and the rotational axis (B) of the spiral tool (4).

4. A machine according to Claim 3, characterised in that from the end of this fixed counter member (5) at a greater distance from the said plane defined by the rotational axis (A) of the tank (1) and by the rotational axis (B) of the spiral tool (4), there projects a connection section (7) disposed substantially radially towards the lateral wall of the tank (1).

## Patentansprüche

1. Knetmaschine für Lebensmittel, insbesondere für auf Mehl basierende Produkte, die aufweist:
- einen Knetbehälter (1), der drehbar um eine erste, im wesentlichen vertikale Achse (A) ist, wobei der Behälter (1) mit einer nach oben vorstehenden, koaxialen Säule (2) versehen ist, die drehbar mit dem Behälter (1) ist;
- eine feste Tragestruktur (3, 3a) angrenzend an den drehbaren Behälter (1);
- ein Knetwerkzeug eines spiralförmigen Typs, das durch die Tragestruktur (3, 3a) derart getragen ist, um sich innenseitig des Behälters (1) um eine zweite, im wesentlichen vertikale Achse (B) unter einem Abstand von der ersten Achse (A) zu drehen, dadurch gekennzeichnet, daß die Maschine auch ein festgelegtes Gegenteil (5) aufweist, das fest an der Tragestruktur (3, 3a) verbunden ist, das aus einer gebogenen Wand besteht, die koaxial zu der Einhüllenden des spiralförmigen Werkzeugs (4) an der Auslaufseite davon in Bezug auf die Drehrichtung des Knetbehälters (1) angeordnet ist, wobei das Gegenteil (5) dazu vorgesehen ist, einen schmalen Durchgangsweg zwischen der Wand und dem spiralförmigen Werkzeug (4) zu bilden, das sich entlang eines gebogenen Abschnitts im wesentlichen koaxial zu der Einhüllenden des spiralförmigen Werkzeugs (4) derart erstreckt, daß die Zeitdauer, für die die Mischung in Kontakt mit dem spiralförmigen Werkzeug (4) verbleibt, erhöht wird und die Mischung auch eine Kompressionskraft zu dem Boden (1b) des Behälters (1b) hin unterworfen wird.

2. Maschine nach Anspruch 1, dadurch gekennzeichnet, daß der Durchgangsweg (10) die Einhüllende des spiralförmigen Werkzeugs (4) mindestens in einem Winkel von 45° umgibt.

3. Maschine nach Anspruch 2, dadurch gekennzeichnet, daß das Teil (5a) des festgelegten Gegenteils (5) die Ebene schneidet, die durch die Drehachse (A) des Behälters (1) und die Drehachse (B) des spiralförmigen Werkzeugs (4) definiert ist.

4. Maschine nach Anspruch 3, dadurch gekennzeichnet, daß von dem Ende dieses festgelegten Gegenteils (5) unter einem größeren Abstand von der Ebene, die durch die Drehachse (A) des Behälters (1) und durch die Drehachse (B) des spiralförmigen Werkzeugs (4) definiert ist, ein Verbindungsabschnitt (7) vorsteht, der im wesentlichen radial zu der seitlichen Wand des Behälters (1) hin angeordnet ist.

## Revendications

1. Machine de pétrissage pour des produits alimentaires, en particulier des mélanges à base de farine, comprenant :
- une cuve de pétrissage (1) qui peut tourner autour d'un premier axe sensiblement vertical (A), ladite cuve (1) étant pourvue d'une colone coaxiale en saillie vers le haut (2) déplaçable avec la cuve (1);
- une structure de support fixe (3, 3a) adjacente à la cuve tournante (1);
- un outil de pétrissage du type en spirale (4) qui est supporté par la structure de support (3, 3a) de façon à tourner à l'intérieur de la cuve (1) autour d'un deuxième axe sensiblement vertical (B) à une distance du premier axe (A), caractérisée en ce que la machine comprend également un contre-élément fixe (5) relié rigidement à la structure de support (3, 3a) constitué d'une paroi arquée disposée coaxialement à l'enveloppe de l'outil en spirale (4), sur le côté aval de celui-ci relativement à la direction de rotation de la cuve de pétrissage (1), ledit contre-élément (5) étant destiné à former un passage étroit entre ladite paroi et l'outil en spirale (4) qui s'étend le long d'une section arquée sensiblement coaxialement à l'enveloppe de l'outil en spirale (4) de telle sorte que la durée pendant laquelle le mélange reste en contact avec l'outil en spirale (4) augmente et que le mélange est également soumis à une force de compression vers le fond (1b) de la cuve (1).

2. Machine selon la revendication 1, caractérisée en ce que le passage étroit (10) entoure l'enveloppe de l'outil en spirale (4) suivant un arc d'au moins 45°.

3. Machine selon la revendication 2, caractérisée en ce qu'une partie (5a) dudit contre-élément fixe (5) coupe le plan défini par l'axe de rotation (A) de la cuve (1) et l'axe de rotation (B) de l'outil en spirale (4).

4. Machine selon la revendication 3, caractérisée en ce que, depuis l'extrémité de ce contre-élément fixe (5) à une plus grande distance dudit plan défini par l'axe de rotation (A) de la cuve (1) et par l'axe de rotation (B) de l'outil en spirale (4), fait saillie une section de connexion (7) disposée sensiblement radialement vers la paroi latérale de la cuve (1).
